# EUROPEAN PATENT SPECIFICATION

(11) **EP 3 939 827 B1**
(45) Date of publication and mention of the grant of the patent: **26.06.2024**
(21) Application number: 21196153.7
(22) Date of filing: 29.03.2019
(51) Int. Cl.: B60N 2/24, B60N 2/015

(54) **BACKREST FOR A VEHICLE**
RÜCKENLEHNE FÜR EIN FAHRZEUG
DOSSIER POUR VÉHICULE

(30) Priority: 29.03.2018 IT 201800004098
(43) Date of publication of application: 19.01.2022
(62) Divisional of application: 19166389.7
(73) Proprietor: IVECO FRANCE S.A.S., 69200 Vénissieux (FR)
(72) Inventor: BOGIRAUD, Sebastien, 07430 SAINT CYR (FR)
(74) Representative: Studio Torta S.p.A.

(56) References cited:
- EP-A1- 3 287 336
- FR-A1- 2 798 331
- FR-A1- 2 924 991
- JP-A- 2007 230 281
- US-A1- 2011 140 499

## Description

### TECHNICAL FIELD

The invention relates to a backrest for a vehicle, in particular a backrest for a vehicle for the public transport of passengers.

### PRIOR ART

Buses usually comprise spaces dedicated to the transport of disabled people and/or of those passengers transporting large elements, for example suitcases or strollers.

The aforesaid spaces comprise backrests configured to allow passengers to rest against them.

Known backrests basically comprise a support element made of a deformable material, which is fastened to tubes defining the vertical and horizontal support bars of the bus. This fastening is usually obtained with threaded elements.

However, this fastening is visible and, furthermore, takes up a lot of space; indeed, the thickness of a known backrest is of at least 100 mm. These dimensions reduce the space that can be used inside the bus because of their size.

Therefore, known bus backrests need to be improved in order to reduce their dimensions and, at the same time, improve their aesthetic appearance.

Known backrests are disclosed in US2011/140499 A1, FR2798331 A1, JP2007230281 A, FR2924991 A1 or EP3287336 A1.

The object of the invention is to solve the above-mentioned drawbacks in an optimized and economic manner.

### SUMMARY OF THE INVENTION

The aforesaid objects are reached by means of a backrest according to the accompanying claims.

### BRIEF DESCRIPTION OF THE DRAWINGS

Further features and advantages will be best understood upon perusal of the description hereinafter, which is provided by mere way of explanatory and non-limiting example, with reference to the accompanying drawings, wherein:
- figure 1 is schematic view from the top of the inside of a bus;

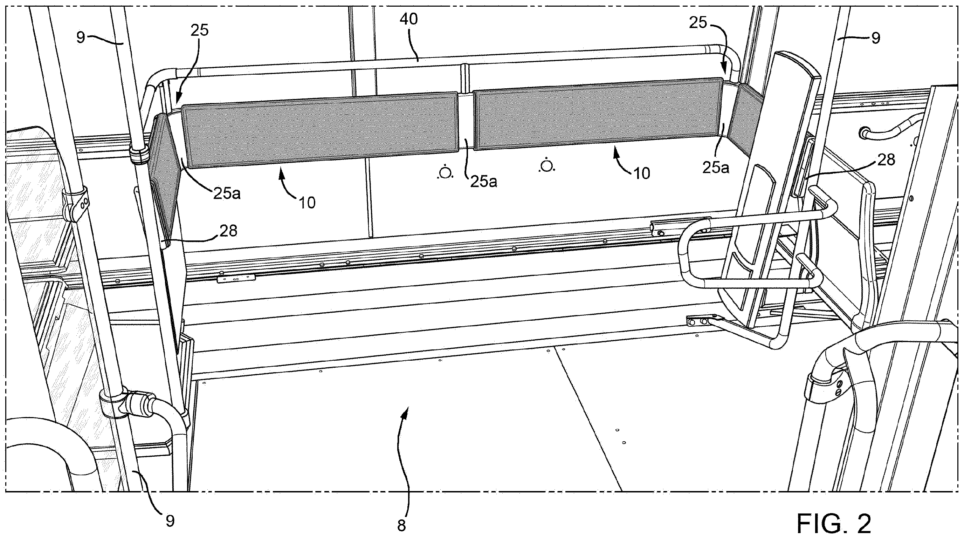

- figure 2 is a perspective view of a space inside the bus of figure 1 comprising a backrest according to the invention;
- figure 3 is a perspective, exploded view of a backrest according to the invention;

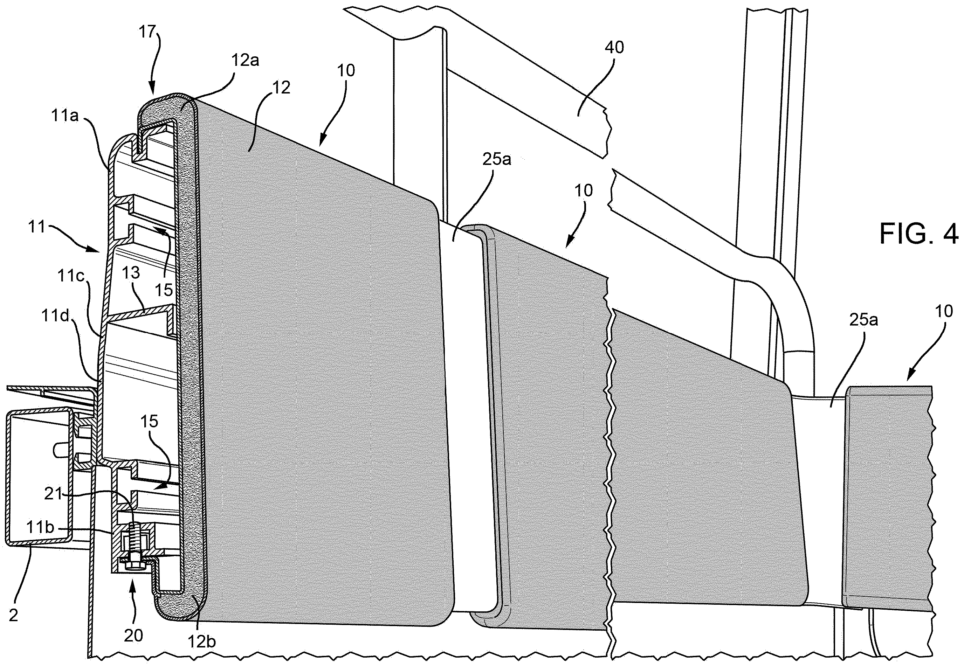

- figure 4 is an enlarged, perspective view of part of the backrest of figure 3; and

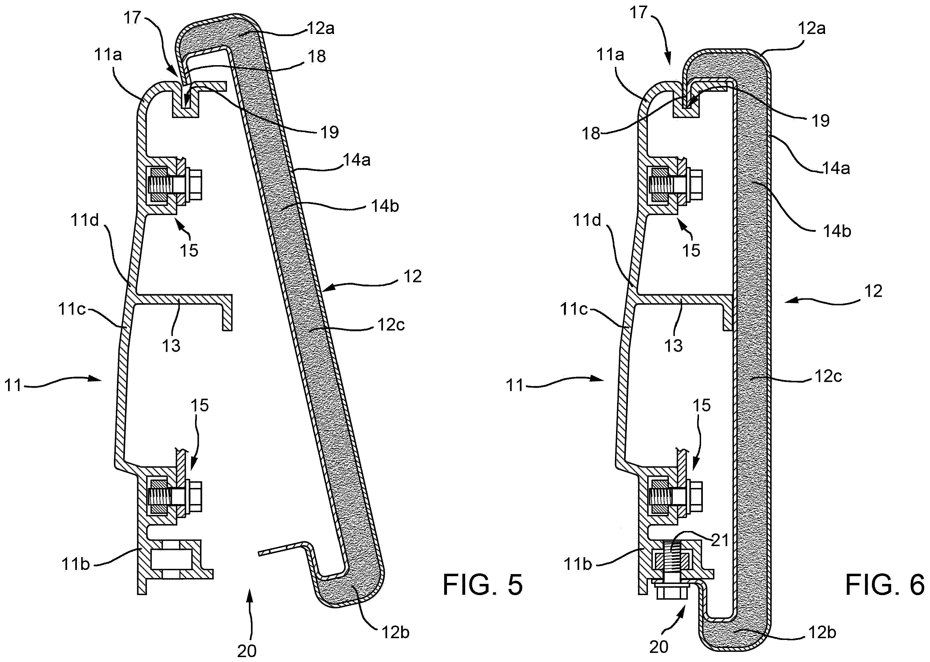

- figures 5 and 6 are cross section views of the backrest of figure 3.

### DETAILED DESCRIPTION OF THE INVENTION

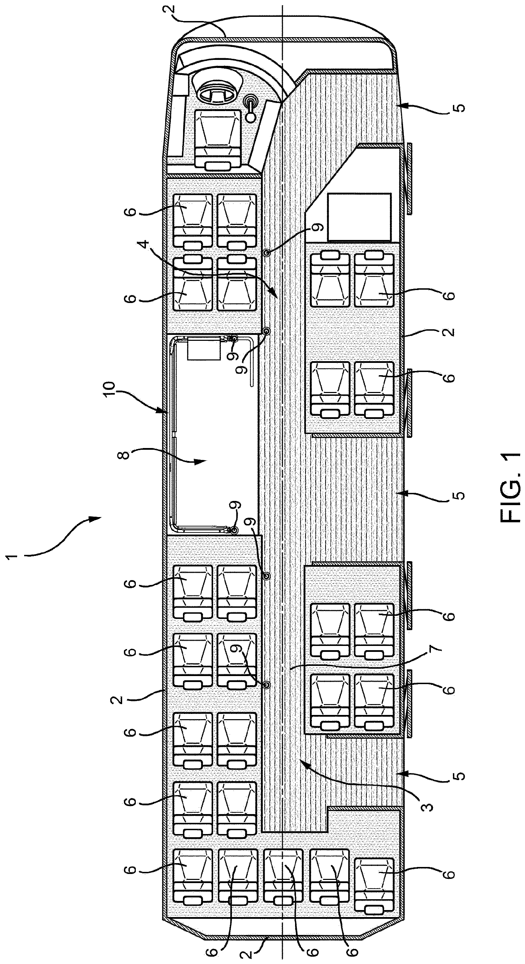

Figure 1 shows a known bus 1 comprising a plurality of walls 2, a pair of side walls, a front wall and a rear wall, a floor 3 and a ceiling (not shown), which delimit an inner space 4 of the vehicle 1 where passengers can seat or stand after having accessed the vehicle through a plurality of doors 5.

The bus 1 usually comprises a plurality of seats 6 arranged inside the space 4 and defining an aisle 7 where passengers can walk in order to go get seated on the seats 6. The bus 1 further comprises an area 8 communicating with the aisle 7 and configured to accommodate disabled people and/or passengers transporting large elements, for example suitcases or strollers.

The bus 1 can also comprise support columns 9, against which a passenger can rest during the ride. The area 8 comprises at least two columns 9 along the aisle 7, one column at the left end and the other one at the right end of the area 8.

The area 8 also comprises a backrest 10, which is configured to allow passengers to rest against it for the duration of the ride.

According to the invention, the backrest 10 basically comprises a profiled element 11, which is configured to directly fasten the backrest 10 to one of the walls 2, and a support element 12, which is supported by the profiled element 11 and is configured to allow a passenger to rest against it. The profiled element 11 can be fastened to the wall 2 in a known manner, for example through threaded means.

The profiled element 11 has a substantially "C"-shaped cross section and comprises an upper portion 11a, which is configured to interact with an upper portion 12a of the support element 12, a lower portion 11b, which is configured to interact with a lower portion 12b of the support element 12, and a side portion 11c, which extends between the upper portion 11a and the lower portion 11b.

The profiled element 11 is made of a metal material, preferably an aluminium alloy. The portions 11a, 11b, 11c are preferably manufactured as one single piece.

The support element 12 has a substantially "C"-shaped cross section and comprises an upper portion 12a, which is configured to interact with the upper portion 11a of the profiled element 11, a lower portion 12b, which is configured to interact with a lower portion 11b of the profiled element 11, and a side portion 12c, which extends between the upper portion 12a and the lower portion 12b. The side portion 12c preferably has a substantially rectangular cross section.

The support element 12 is preferably made of a deformable material; more preferably, the element 12 comprises an outer layer 14a, for example made of cloth or leather, which covers a deformable core 14b, for example made of a polymer foam.

The profiled element 11 and the support element 12 are arranged in front of one another, thus defining a gap between one another. The total thickness of the profiled element 11 and of the support element 12 coupled together is smaller than or, preferably, equal to 50 mm.

The side portion 11c can also comprise a flange 13, which extends from the side portion 11c into the gap towards the support element 12, so as to interact, through contact, with the side portion 12c of the element 12. The flange 13 preferably is perpendicular to the support element 12. The flange 13 is configured to prevent the support element 12 from bending on the profiled element 11.

The side portion 11c can further comprise at least one guide 15, which is configured to allow the profiled element 11 to be connected to an additional profiled element 11, as described more in detail below. In the example described herein, the profiled element 11 comprises two guides 15, which are arranged under and above the flange 13, respectively.

The flange 13 and the guides 15 are arranged on the side of the profiled element 11 in front of the support element 12; on the contrary, the opposite side of the support element 12 does not comprise any fastening element and defines a substantially flat surface 11c, which can comprise a desired surface finish.

The upper portions of the profiled element 11 and of the support element 12 interact with one another thanks to a shape coupling 17. The shape coupling 17 preferably is reversible and allows the support element 12 to be coupled to and uncoupled from the profiled element 11 depending on the needs. The shape coupling 17 can be obtained through a tab 18, which extends from the upper portion 12a of the support element 12, preferably has the shape of a hook and is configured to be inserted into a groove 19, which is obtained on the upper portion 11a of the profiled element 11.

Similarly, the lower portions of the profiled element 11 and of the support element 12 interact with one another thanks to a mechanical coupling 20; the mechanical coupling 20 preferably is reversible and allows the support element 12 to be coupled to and uncoupled from the profiled element 11 depending on the needs. The mechanical coupling 20 can be obtained by means of a threaded element 21, which is configured to join the tab extending from the lower portion 12b of the support element 12 to the lower portion 11b of the profiled element 11.

The backrest 10 preferably is inclined relative to the vertical by 5°. Furthermore, the support element 12 vertically extends more than the profiled element 11, so that the upper portion 12a of the support element 12 rises above the upper portion 11a of the profiled element 11 and so that, similarly, the lower portion 12b of the support element 12 rises above the lower portion 11b of the profiled element 11. In the way, the reversible couplings 17 and 20 are concealed form the passengers of the vehicle 1, since they are hidden at least by the support element 12.

The backrest 10 can also comprise joining elements 25, which are configured to connect two backrests 10 to one another, so as to build a perimeter of the backrest 10 having a desired shape.

The joining elements 25 basically each comprise a profiled element 25a having a cross section with a shape that is complementary to the shape of the profiled element 11, so as to be completely coupled inside the latter.

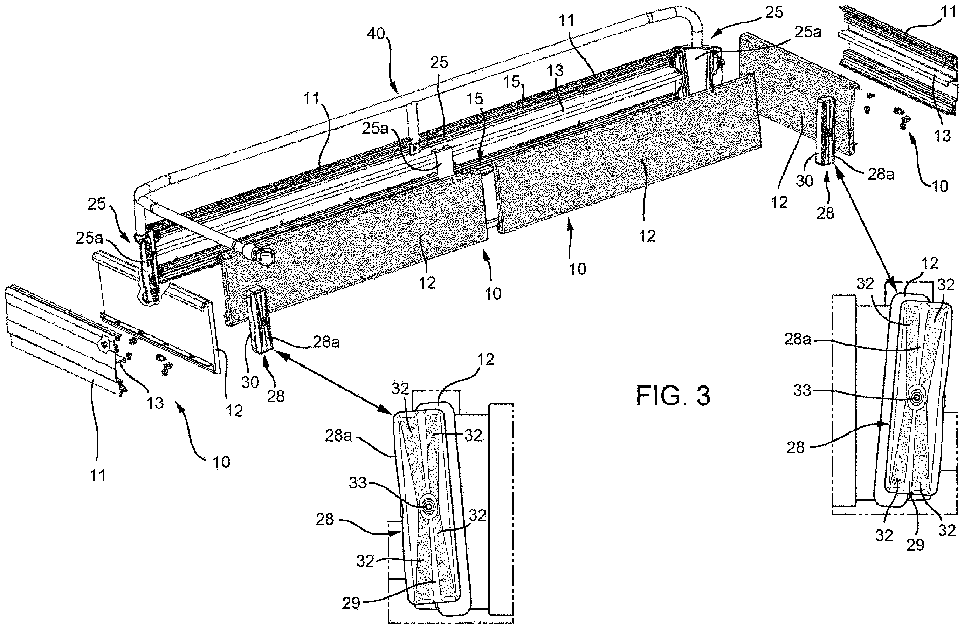

In the example described herein, see figure 3, four backrests 10 are connected to one another so as to delimit a "C" shape corresponding to part of the perimeter of the area 8. Therefore, the joining elements 25 are two angle profiled elements 25a, which are configured to perpendicularly connect two backrests 10 to one another, and a flat profiled element 25a, which is configured to connect to backrests 10 to one another in a parallel manner. The joining elements 25 are further configured to conceal from view the fastening of the profiled element 11 on the wall 2 and the fastening of a handrail, as described more in detail below.

The joining elements 25 comprise at least one flange , which can be connected to a respective guide 15 of the profiled element 11 so as to fasten the latter to the joining element 25. In the example described herein, a joining element 25 comprises two flanges , which are configured to be connected to the two guides 15 supported by the profiled element 11. The connection can be obtained by means of coupling means, for example threaded elements.

The backrest 10 can further comprise terminal elements 28, which are configured to be connected to a side end of a backrest 10 so as to close the gap defined between the profiled element 11 and the support element 12 and connect the backrest 10 to one of the columns 9.

The terminal elements 28 basically comprise a cover 28a having a substantially rectangular base 29 and an edge 30 extending from the base 29 at least along part of the perimeter thereof. The shape of the base 29 and of the corresponding edge 30 is complementary to the shape of the profiled element 11 so as to be totally coupled inside the latter.

The base 29 comprises an outer surface 29a, which is configured to allow the terminal element 28 to be coupled to one of the support columns of the vehicle 1. This coupling is obtained by means of a shape coupling between the outer surface 29a and the support columns 9 of the vehicle 1.

This shape coupling preferably comprises at least one lowered surface 32, which is lowered relative to the outer surface 29a of the base 29 and has a cross section that is complementary to the outer surface of the columns 9. There preferably are two lowered portions 32, which are arranged so as to cross one another, more preferably so as to cross one another in an "X" shape in a symmetrical manner and with a 5° angle between one another; in this way, the same terminal element 28 can be equally used at a left or right end of the backrest 10 in order to connect the latter to a column 9.

A terminal element 28 can be fastened to the respective column 9 thanks to a threaded element (not shown) configured to go through a hole 33 made at the bottom of said at least one lowered portion 32 and through a hole (not shown) made at the front in the column 9.

The backrest 10 can further comprise a column 40, which can be connected to at least one between the profiled portion 11 and the joining elements 25 and extends above the backrest 10 along at least part of the perimeter thereof. The column 40 preferably is horizontal and can be fastened to the upper portion 11a of the profiled element 11 thanks to a threaded element. Part of the column 40 can advantageously be manufactured so as to be integral to the joining elements 25.

Owing to the above, the advantages of a backrest 10 according to the invention are evident.

The backrest 10 according to the invention can be directly fastened to the side wall 2 of the vehicle. By so doing, its dimensions are reduced and the backrests takes up less than 50 mm.

Furthermore, the backrest 10 comprises a support element 12, which can easily be uncoupled from the profiled element 11 in order to be replaced. Its connection to the profiled element 11 is concealed by the support element 12. In this way, the fastening is concealed from the passengers' view and, therefore, the backrest 10 has a better appearance.

The outer surface 11b of the profiled element 11, which is visible, does not comprise any fastening element and can comprise a desired surface finish.

The joining element 25 allow additional backrests 10 to be connected to a first backrest 10 in a simple and versatile manner.

Furthermore, the terminal elements 28 allow the gap between the profiled element 11 and the support element 12 to be closed and the backrest 10 to be connected to a column 9.

Finally, the backrest 10 according to the invention can clearly be subjected to changes and variants, which, though, do not go beyond the scope of protection set forth in the claims.

For example, the shape or the material of the profiled element 11 and/or of the support element 12 could change.

## Claims

1. A backrest (10) for a vehicle (1) for the public transport of passengers, said backrest (10) comprising a fastening element (11) configured to be directly fixed to a wall (2) of said vehicle (1) and a support element (12) supported by said fastening element (11), wherein said fastening element (11) is a profiled element and said support element (12) comprises an outer layer (14a) which covers a deformable core (14b),
**characterised in that** said backrest (10) comprises at least one between:
- at least one terminal element (28) configured to close a gap defined between said fastening element (11) and said support element (12), wherein said terminal element (28) is configured to connect said backrest (10) to a column (9) of said vehicle (1) and
- at least one joining element (25) configured to connect two backrests (10) together, wherein said joining element (25) comprises a profiled element (25a), wherein said joining element (25) is configured to connect two fastening elements (11) together and to conceal the fastening of other elements (40) to said fastening element (11) and of said fastening element (11) to said wall (2).

2. The backrest according to claim 1, wherein the thickness of said backrest (10) is less than 50 mm.

3. The backrest according to claim 1 or 2, wherein said fastening element (11) and said support element (12) comprise respective upper portions (11a, 12a) and lower portions (11b, 12b) each configured to interact with one another to define reversible couplings of said support element (12) on said fastening element (11).

4. The backrest according to claim 3, wherein at least one of said upper portions (11a, 12a) and said lower portions (11b, 12b) are coupled to one another by means of a shape coupling (17).

5. The backrest according to claim 4, wherein said shape coupling (17) comprises a tab (18), which is supported either by the upper portion (11a) of said fastening element (11) or by the upper portion (12a) of said support element (12) and is configured to be inserted in a groove (19) provided in the other one of either the upper portion (11a) of said fastening element (11) or the upper portion (12a) of said support element (12).

6. The backrest according to claim 3, wherein at least one of said upper portions (11a, 12a) and said lower portions (11b, 12b) are coupled by means of a mechanical coupling (20).

7. The backrest according to claim 6, wherein said mechanical coupling (20) is a threaded coupling.

8. The backrest according to one of the claims from 3 to 7, wherein said reversible couplings are concealed from view by said support element (12).

9. The backrest according to any of the preceding claims wherein said terminal element (28) comprises lowered portions (32) having a section complementary to an outer surface of a column (9) of said vehicle (1).

10. The backrest according to claim 9, wherein said lowered portions (32) are two in number and are crossed in an "X" shape, defining an angle of at least 5° between one another.

11. The backrest according to one of the preceding claims, wherein said fastening element (11) carries an element (13) extending towards said support element (12) and cooperating with the latter in contact, so as to prevent it from collapsing when a load is applied to said support element (12) in the direction of said fastening element (11).

## Patentansprüche

1. Rückenlehne (10) für ein Fahrzeug (1) für den öffentlichen Transport von Passagieren, welche Rückenlehne (10) ein Befestigungselement (11) umfasst, dazu ausgebildet, unmittelbar an einer Wand (2) des Fahrzeugs (1) befestigt zu werden, und ein Lagerelement (12), das von dem Befestigungselement (11) gelagert wird, wobei das Befestigungselement (11) ein Profilelement ist und das Lagerelement (12) eine äußere Schicht (14a) umfasst, die einen verformbaren Kern (14b) bedeckt,
**dadurch gekennzeichnet, dass** die Rückenlehne (10) zumindest eines von den folgenden umfasst:
- zumindest ein Anschlusselement (28), ausgebildet, um einen Zwischenraum zwischen dem Befestigungselement (11) und dem Lagerelement (12) zu schließen, wobei das Anschlusselement (28) dazu ausgebildet ist, die Rückenlehne (10) mit einer Säule (9) des Fahrzeugs (1) zu verbinden, und
- zumindest ein Verbindungselement (25), ausgebildet zur Verbindung zweier Rückenlehnen (10) miteinander, welches Verbindungselement (25) ein Profilelement (25a) umfasst, und welches Verbindungselement (25) dazu ausgebildet ist, zwei Befestigungselemente (11) miteinander zu verbinden und die Befestigung anderer Elemente (40) am Befestigungselement (11) und des Befestigungselements (11) and der Wand (2) zu verdecken.

2. Rückenlehne gemäß Anspruch 1, bei welcher die Dicke der Rückenlehne (10) weniger als 50 mm beträgt.

3. Rückenlehne gemäß Anspruch 1 oder 2, bei welcher das Befestigungselement (11) und das Lagerelement (12) jeweils obere Teile (11a, 12a) und untere Teile (11b, 12b) umfassen, die jeweils dazu ausgebildet sind, zusammenzuwirken, um lösbare Kupplungen des Lagerelements (12) an dem Befestigungselement (11) zu definieren.

4. Rückenlehne gemäß Anspruch 3, bei welcher zumindest einer der oberen Teile (11a, 12a) und der unteren Teile (11b, 12b) miteinander durch eine Formkupplung (17) gekuppelt sind.

5. Rückenlehne gemäß Anspruch 4, bei welcher die Formkupplung (17) eine Lasche (18) umfasst, die entweder von dem oberen Teil (11a) des Befestigungselements (11) oder von dem oberen Teil (12a) des Lagerelements (12) getragen wird und dazu ausgebildet ist, in eine Nut (19) eingesetzt zu werden, die in dem jeweils anderen von dem oberen Teil (11a) des Befestigungselements (11) oder dem oberen Teil (12a) des Lagerelements (12) vorgesehen ist.

6. Rückenlehne gemäß Anspruch 3, bei welcher zumindest einer der oberen Teile (11a, 12a) und der unteren Teile (11b, 12b) durch eine mechanische Kupplung (20) gekoppelt ist.

7. Rückenlehne gemäß Anspruch 6, bei welcher die mechanische Kupplung (20) eine Schraubkupplung ist.

8. Rückenlehne gemäß einem der Ansprüche 3 bis 7, bei welcher die lösbaren Kupplungen durch das Lagerelement (12) verdeckt werden.

9. Rückenlehne gemäß einem der vorhergehenden Ansprüche, bei welcher das Anschlusselement (28) abgesenkte Teile (32) umfasst, mit einem Querschnitt, der komplementär zur einer äußeren Oberfläche einer Säule (9) des Fahrzeugs (1) ist.

10. Rückenlehne gemäß Anspruch 9, bei welcher die abgesenkten Teile (32) zweifach vorhanden sind und "X"-förmig gekreuzt sind und dabei einen Winkel von zumindest 5° zwischen sich begrenzen.

11. Rückenlehne gemäß einem der vorhergehenden Ansprüche, bei welcher das Befestigungselement (11) ein Element (13) trägt, das sich zum Lagerelement (12) hin erstreckt und mit letzterem in Berührung zusammenwirkt, so dass es dieses am Nachgeben hindert, wenn eine Last auf das Lagerelement (12) zum Befestigungselement (11) hin wirkt.

## Revendications

1. Dossier (10) pour un véhicule (1) pour le transport public de passagers, ledit dossier (10) comprenant un élément de fixation (11) configuré pour être fixé directement à une paroi (2) dudit véhicule (1) et un élément de support (12) supporté par ledit élément de fixation (11), dans lequel ledit élément de fixation (11) est un élément profilé et ledit élément de support (12) comprend une couche extérieure (14a) qui couvre un noyau déformable (14b),
**caractérisé en ce que** ledit dossier (10) comprend au moins l'un parmi :
- au moins un élément terminal (28) configuré pour fermer un espace défini entre ledit élément de fixation (11) et ledit élément de support (12), dans lequel ledit élément terminal (28) est configuré pour relier ledit dossier (10) à une colonne (9) dudit véhicule (1) et
- au moins un élément de jonction (25) configuré pour relier deux dossiers (10) ensemble, dans lequel ledit élément de jonction (25) comprend un élément profilé (25a), dans lequel ledit élément de jonction (25) est configuré pour relier deux éléments de fixation (11) ensemble et pour dissimuler la fixation d'autres éléments (40) audit élément de fixation (11) et dudit élément de fixation (11) à ladite paroi (2).

2. Dossier selon la revendication 1, dans lequel l'épaisseur dudit dossier (10) est inférieure à 50 mm.

3. Dossier selon la revendication 1 ou 2, dans lequel ledit élément de fixation (11) et ledit élément de support (12) comprennent des portions supérieures (11a, 12a) et des portions inférieures (11b, 12b) respectives configurées chacune pour interagir les unes avec les autres pour définir des couplages réversibles dudit élément de support (12) sur ledit élément de fixation (11).

4. Dossier selon la revendication 3, dans lequel au moins une desdites portions supérieures (11a, 12a) et desdites portions inférieures (11b, 12b) sont couplées les unes aux autres au moyen d'un couplage de forme (17).

5. Dossier selon la revendication 4, dans lequel ledit couplage de forme (17) comprend une patte (18) qui est supportée par la portion supérieure (11a) dudit élément de fixation (11) ou par la portion supérieure (12a) dudit élément de support (12) et est configurée pour être insérée dans une rainure (19) prévue dans l'autre de la portion supérieure (11a) dudit élément de fixation (11) ou de la portion supérieure (12a) dudit élément de support (12).

6. Dossier selon la revendication 3, dans lequel au moins une desdites portions supérieures (11a, 12a) et desdites portions inférieures (11b, 12b) sont couplées au moyen d'un couplage mécanique (20).

7. Dossier selon la revendication 6, dans lequel ledit couplage mécanique (20) est un couplage fileté.

8. Dossier selon l'une des revendications de 3 à 7, dans lequel lesdits couplages réversibles sont dissimulés à la vue par ledit élément de support (12).

9. Dossier selon l'une quelconque des revendications précédentes, dans lequel ledit élément terminal (28) comprend des portions abaissées (32) présentant une section complémentaire à une surface extérieure d'une colonne (9) dudit véhicule (1).

10. Dossier selon la revendication 9, dans lequel lesdites portions abaissées (32) sont deux en nombre et sont croisées en une forme de « X », définissant un angle d'au moins 5° l'une entre l'autre.

11. Dossier selon l'une des revendications précédentes, dans lequel ledit élément de fixation (11) porte un élément (13) s'étendant vers ledit élément de support (12) et coopérant avec ce dernier en contact, de sorte à l'empêcher de s'effondrer lorsqu'une charge est appliquée audit élément de support (12) dans la direction dudit élément de fixation (11).
